# EUROPÄISCHE PATENTSCHRIFT

(11) **EP 2 498 956 B1**
(45) Veröffentlichungstag und Bekanntmachung des Hinweises auf die Patenterteilung: **11.06.2014**
(21) Anmeldenummer: 10801377.2
(22) Anmeldetag: 14.12.2010
(51) Int. Cl.: B25J 9/14, B25J 17/02

(54) **FLUIDISCH BETREIBBARE AUSGLEICHSEINHEIT**
REGULATING UNIT OPERABLE BY USE OF A FLUID
UNITÉ D'ÉQUILIBRAGE À FONCTIONNEMENT FLUIDIQUE

(30) Priorität: 16.12.2009 DE 102009058653
(43) Veröffentlichungstag der Anmeldung: 19.09.2012
(73) Patentinhaber: Festo AG & Co. KG, 73734 Esslingen (DE)
(72) Erfinder: KAMINSKI, Ruwen, 70190 Stuttgart (DE); NEUMANN, Rüdiger, 73760 Ostfildern (DE); HILDEBRANDT, Alexander, 72669 Unterensingen (DE)
(74) Vertreter: Kocher, Mark Werner
(86) Internationale Anmeldenummer: PCT/EP2010/007586
(87) Internationale Veröffentlichungsnummer: WO 2011/082768

(56) Entgegenhaltungen:
- EP-A1- 1 986 826
- DE-A1- 10 149 395
- DE-A1-102005 056 846
- DE-U1- 20 107 329
- US-A- 5 351 602

## Beschreibung

Die Erfindung betrifft eine fluidisch betreibbare Ausgleichseinheit. Eine solche Ausgleichseinheit kann beispielsweise an einem fluidisch, insbesondere pneumatisch oder hydraulisch, betreibbaren Manipulatorarm eingesetzt werden. Ein solcher Manipulatorarm ist insbesondere zur Bewegung eines Werkstücks oder Werkzeugs zwischen unterschiedlichen räumlichen Orten vorgesehen. Wenn eine einfache Aufbauweise des Manipulatorarms erreicht werden soll, wird die Anzahl der Freiheitsgrade der Bewegung begrenzt, so dass ein distaler Endbereich des Manipulatorarms einen räumlichen Ort innerhalb des Bewegungsbereichs mit genau einer räumlichen Ausrichtung ansteuern kann. Um trotz Beibehaltung der einfachen Aufbauweise des Manipulatorarms dennoch eine vorteilhafte Anpassung der räumlichen Ausrichtung des vom Manipulatorarm bewegten Werkstücks oder Werkzeugs zu ermöglichen, kann vorgesehen werden, am distalen Endbereich des Manipulators eine Ausgleichseinheit anzubringen. Die Ausgleichseinheit ist derart ausgebildet, dass sie wenigstens einen zusätzlichen Freiheitsgrad der Bewegung, insbesondere wenigstens einen rotatorischen Freiheitsgrad der Bewegung, bereitstellt.

Aus der US 5,351,602 ist eine Anordnung aus mehreren beweglichen miteinander verbundenen Segmenten und einem mechanischen Muskel bekannt, der zwischen zwei der Segmente angeordnet ist. Der Muskel weist eine in Längsrichtung starre, radial expandierbare Hülse mit einer unter Druck setzbaren Blase aus elastischem Material auf. Die Blase vergrößert sich bei Druckbeaufschlagung diametral und wölbt die Wand der Hülse nach außen. Die Hülse verkürzt sich daraufhin in axialer Richtung, um die von der Hülle eingenommene Ausbuchtung auszugleichen. Ein Anschlussstück an jedem Ende der Hülse,verbindet die Hülse mit den jeweiligen Segmenten des Gelenkarms, so dass mit der axiale Kontraktion der Hülse eine Bewegung des einen Segments relativ zum anderen bewirkt werden kann.

Die EP1986826 B1 offenbart einen Roboterarm, welcher aus einem oder mehreren, gegebenenfalls miteinander verketteten Schwenkhebeln gebildet ist, wobei ein Schwenkhebel aus einer Stütze, einer Basis, einem schwenkbaren Teil und mehreren Luftmuskeln besteht. Die Basis ist mit dem einen Ende der Stütze starr verbunden, der schwenkbare Teil ist am zweiten Ende der Stütze um eine oder zwei von der Längsrichtung der Stütze abweichend ausgerichtete Achsen schwenkbar gelagert. Von der Basis zum schwenkbaren Teil erstrecken sich Luftmuskeln, wobei die einzelnen Luftmuskeln an gegenüberliegenden Seiten der Schwenkachsen des schwenkbaren Teils an diesem angreifen. Durch die Steuerung wird die Stellung der einzelnen Schwenkhebel und der in den einzelnen Luftmuskeln anliegende Druck gemessen und unter Miteinbeziehung der Druck-Weg-Diagramme der einzelnen Luftmuskeln und der geometrischen Hebelverhältnisse auf die von allen mit Luftmuskeln versehenen Schwenkhebeln werden nach außen wirkende Kraft rückgerechnet und eine Kraftbegrenzung für diese Kräfte durchgeführt.

Die DE-U1-201 07 329, auf die sich der Oberbegriff des Anspruchs 1 stützt, zeigt eine Positioniervorrichtung zur Positionierung eines Werkzeuges, mit einer Schwenkeinheit, die eine Halterung und einen dieser mit Abstand gegenüberliegenden Träger aufweist, wobei der Träger über ein Kugelgelenk an der Halterung gelagert ist und wobei um das Kugelgelenk herum verteilt mehrere, jeweils einenends an der Halterung und andernends an dem Träger angreifende, fluidbetätigte Kontraktionseinheiten vorgesehen sind, die jeweils mindestens einen bei Innendruckbeaufschlagung eine Längenkontraktion erfahrenden Kontraktionsschlauch enthalten und bei entsprechender Betätigung eine Schwenkbewegung des Trägers bezüglich der Halterung hervorrufen können, und mit einer an dem Träger der Schwenkeinheit mit diesem mitschwenkbar angeordneten Lineareinheit, die einen linear bewegbaren Werkzeughalter für das zu positionierende Werkzeug und einen zur Erzeugung der Linearbewegung dienenden Linearaktor aufweist.

Die Aufgabe der Erfindung besteht darin, eine stabile Ausgleichseinheit mit einer einfachen Aufbauweise bereitzustellen.

Diese Aufgabe wird durch eine Ausgleichseinheit mit den Merkmalen des Anspruchs 1 gelöst. Hierbei ist vorgesehen, dass die Gelenkeinrichtung als Kreuzgelenk ausgebildet ist, das wenigstens zwei Gelenkteile und wenigstens ein Kopplungselement umfasst, wobei an jeder Koppelplatte wenigstens eines der Gelenkteile angebracht ist und die Gelenkteile formschlüssig in Führungsnuten des Kopplungselements eingreifen.

Vorzugsweise umgreift, insbesondere umschließt, das Gelenkelement das Kopplungselement derart, dass eine Montage oder Demontage nur bei plastischer Deformation des Gelenkelements oder des Kopplungselements möglich ist. Dadurch wird eine stabile und schwenkbewegliche Verbindung zwischen den beiden Gelenkteilen erreicht. Durch den Eingriff des jeweiligen Gelenkelements in das Kopplungselement wird jeweils eine Schwenkachse bestimmt. Die beiden Gelenkteile, die im Eingriff mit dem Kopplungselement stehen, sind vorzugsweise um 90 Grad versetzt zueinander angeordnet, so dass die jeweils zugeordneten Schwenkachsen senkrecht zueinander ausgerichtet sind.

Dabei weist die Ausgleichseinheit zwei zueinander beabstandet angeordnete Koppelplatten auf, zwischen denen wenigstens zwei fluidisch betreibbare Linearstellmittel zur variablen Einstellung einer Verkippung zwischen der ersten und der zweiten Koppelplatte angeordnet sind, wobei die Linearstellmittel jeweils wenigstens eine Fluidkammer mit jeweils wenigstens einem elastisch deformierbaren Wandbereich umfassen, der für eine Längenänderung des jeweiligen Linearstellmittels bei einer Druckbeaufschlagung der Fluidkammer ausgebildet ist, und mit einer zwischen den beiden Koppelplatten angeordneten Gelenkeinrichtung, die für eine Relativbeweglichkeit der beiden Koppelplatten um zwei senkrecht zueinander ausgerichtete Schwenkachsen ausgebildet ist.

Aufgrund der Wechselwirkung zwischen den wenigstens zwei Linearstellmitteln und der Gelenkeinrichtung ist eine relative Verkippung der ersten Koppelplatte gegenüber der zweiten Koppelplatte um die beiden senkrecht zueinander ausgerichteten Schwenkachsen bei Einleitung von Linearbewegungen mittels der Linearstellmittel möglich. Dabei sind die Linearstellmittel und die Gelenkeinrichtung vorzugsweise derart angeordnet, dass die Schwenkachsen in einer gemeinsamen Ebene angeordnet sind. Vorzugsweise ist die von den beiden Schwenkachsen bestimmte Ebene zumindest im Wesentlichen parallel zu einer Haupterstreckungsebene wenigstens einer Koppelplatte ausgerichtet. Besonders bevorzugt sind die Haupterstreckungsebenen der beiden Koppelplatten in einer Neutralstellung der Ausgleichseinheit zumindest im Wesentlichen parallel zueinander und zu der Schwenkachsenebene ausgerichtet.

Eine der beiden Koppelplatten kann beispielsweise zur Anbringung an einem distalen Endbereich eines Manipulatorarms vorgesehen sein. Die andere Koppelplatte ist vorzugsweise so ausgestaltet, dass sie die Anbringung eines Werkstückträgers oder Werkzeughalters ermöglicht. Mit Hilfe der Ausgleichseinheit kann somit im Zusammenspiel mit dem Manipulatorarm eine Ansteuerung eines räumlichen Orts in mehreren, unterschiedlichen Konfigurationen und damit einhergehenden unterschiedlichen Stellungen des Werkstücks oder Werkzeugs erreicht werden. Somit kann ein entsprechender Manipulatorarm einfach aufgebaut werden und bei Bedarf mit einer erfindungsgemäßen Ausgleichseinheit ausgerüstet werden.

Die fluidisch betreibbaren Linearstellmittel sind dazu ausgebildet, eine Verkippung zwischen der ersten und der zweiten Koppelplatte einzustellen. Hierzu sind die Linearstellmittel jeweils mit wenigstens einer Fluidkammer ausgerüstet, die jeweils wenigstens einen elastisch deformierbaren Wandbereich umfasst. Die Funktion der Fluidkammer besteht darin, bei einer Druckbeaufschlagung mit einem Fluid, insbesondere Hydraulikflüssigkeit oder Druckluft, mittels einer Längenänderung des jeweiligen Linearstellmittels eine zumindest im Wesentlichen lineare Bewegung zu erzeugen. Diese Linearbewegung wird dann dazu eingesetzt, die beiden Koppelplatten zueinander zu verkippen. Um sicherzustellen, dass es bei einer linearen Bewegung wenigstens eines Linearstellmittels zu einer vorhersehbaren Kippbewegung der beiden Koppelplatten zueinander kommt, ist die Gelenkeinrichtung vorgesehen. Die Gelenkeinrichtung kann als Festkörpergelenk oder Bewegungsgelenk oder als Kombination davon ausgebildet sein. Die Gelenkeinrichtung ist vorzugsweise zentral zwischen den Linearstellmitteln angeordnet. Besonders bevorzugt ist die Gelenkeinrichtung derart ausgebildet, dass sie ausschließlich Kippbewegungen der beiden Koppelplatten zueinander zulässt.

Vorteilhafte Weiterbildungen der Erfindung sind Gegenstand von Unteransprüchen.

Zweckmäßig ist es, wenn wenigstens ein Linearstellmittel zumindest mit einem ersten Endbereich an wenigstens einer der Koppelplatten einstückig, vorzugsweise abdichtend, angeformt ist. Hierdurch kann eine einfache Aufbauweise für die Kombination aus Linearstellmittel und Koppelplatte erzielt werden, da eine Montage und bei geeigneter Ausgestaltung auch eine Abdichtung zwischen Linearstellmittel und Koppelplatte entfällt.

Vorteilhaft ist es, wenn wenigstens ein Linearstellmittel an einem zweiten Endbereich als Schwenkgelenkelement, vorzugsweise als Kugelgelenkelement, insbesondere als Gelenkkugel, ausgebildet ist. Hierdurch wird ein geringer Bewegungswiderstand zwischen dem zweiten Endbereich des Linearstellmittels und der zweiten Koppelplatte gewährleistet. Bei einer einstückigen Ausbildung des ersten Endbereichs des Linearstellmittels mit der ersten Koppelplatte wird das Linearstellmittel durch die einstückige Verbindung vorteilhaft abgestützt, wobei jedoch ein gewisser Bewegungswiderstand bei der Verkippung der beiden Koppelplatten überwunden werden muss, der in direktem Zusammenhang mit der elastischen Deformierbarkeit des wenigstens einen elastisch deformierbaren Wandbereichs steht. Durch das Schwenkgelenk am zweiten Endbereich des Linearstellmittels kann dort eine widerstandsarme Gleitbewegung zwischen dem Schwenkgelenkelement des Linearstellmittels und der zweiten Koppelplatte sichergestellt werden.

Bevorzugt sind die, insbesondere einstückig mit den zugeordneten Koppelplatten ausgebildeten, Gelenkteile der Gelenkeinrichtung für eine Begrenzung der Relativbeweglichkeit der beiden Koppelplatten auf zwei rotatorische Freiheitsgrade der Bewegung ausgebildet. Bedingt durch den Aufbau der Gelenkeinrichtung als Kreuzgelenk werden translatorische Relativbewegungen zwischen den beiden Koppelplatten verhindert, so dass eine Längenänderung wenigstens eines Linearstellmittels zumindest nahezu vollständig in eine Verschwenkung der beiden Koppelplatten zueinander umgesetzt wird. Bevorzugt ermöglicht die Gelenkeinrichtung eine Drehmomentübertragung um eine Achse, die senkrecht zu den beiden Schwenkachsen ausgerichtet ist. Hierdurch wird eine vorteilhafte Drehsteifigkeit der Ausgleichseinheit gewährleistet. Dies ermöglicht auch bei hoher Belastung der Ausgleichseinheit eine exakte Vorausplanung für die im Raum zu erzielende Ausrichtung der dem Manipulatorarm abgewandten Koppelplatte der Ausgleichseinheit.

Zweckmäßig ist es, wenn die Koppelplatten und die Linearstellmittel mittels eines generativen Herstellungsverfahrens, insbesondere selektivem Lasersintern, zumindest im Wesentlichen einstückig hergestellt sind, insbesondere in einem gemeinsamen Herstellungsprozess. Bevorzugt sind die Koppelplatten und die Linearstellmittel aus Kunststoff oder Metall hergestellt. Durch den generativen Herstellungsprozess kann in vorteilhafter Weise eine zumindest im Wesentlichen einstückige Gestaltung der Bauteile der Ausgleichseinheit erreicht werden, da diese Bauteile aus einer formlosen Masse, beispielsweise Kunststoffpulver oder Metallpulver, abgeschieden werden und dabei bereits in dem späteren Zusammenbauzustand angeordnet werden. Hierdurch entfällt ein Zusammenfügen von Bauteilen zumindest weitestgehend, vorzugsweise vollständig. Vielmehr werden die Bauteile in dem gemeinsamen Herstellungsprozess zeitgleich und unmittelbar an ihrer späteren Einbauposition erzeugt. Bei Anwendung eines derartigen Herstellungsverfahrens können zudem auch komplexe, insbesondere hinterschnittene, Geometrien in einfacher und kostengünstiger Weise hergestellt werden.

Bevorzugt ist zwischen den Koppelplatten wenigstens eine, vorzugsweise generativ hergestellte, abschnittsweise teleskopierbar ausgeführte Aufnahmeeinrichtung für eine Wegmesseinrichtung angeordnet, die zwei jeweils endseitig an den gegenüberliegenden Koppelplatten schwenkbeweglich gelagerte, zueinander linearbewegliche Teleskopglieder umfasst. Mit Hilfe der Aufnahmeeinrichtung, die vorzugsweise generativ und somit zeitgleich mit den Koppelplatten hergestellt ist und keinen zusätzlichen Herstellungsprozess erfordert, kann in einfacher Weise eine Sensoreinrichtung in die Ausgleichseinheit integriert werden. Bei der Sensoreinrichtung kann es sich insbesondere um eine lineare Wegmesseinrichtung, beispielsweise ein Linearpotentiometer, handeln, das anhand des lokal ermittelten Abstandes zwischen den beiden Koppelplatten die Ermittlung eines Kippwinkels der Koppelplatten ermöglicht.

Bei einer vorteilhaften Weiterbildung der Erfindung ist vorgesehen, dass die Teleskopglieder an einander entgegengesetzten Endbereichen, insbesondere mittels Kugelgelenkelementen, relativbeweglich an der Koppelplatte angebracht sind und einander zugewandte Endbereiche teleskopartig schiebebeweglich ineinander aufgenommen sind. Hierdurch wird erreicht, dass die Kippbewegung zwischen den beiden Koppelplatten um die beiden senkrecht zueinander ausgerichteten Schwenkachsen in einer reinen Linearbewegung der schiebebeweglich ineinander aufgenommenen Endbereiche resultiert und keine Biege- oder Drehmomente auf die Teleskopglieder einwirken.

Vorzugsweise sind genau drei Linearstellmittel zwischen den Koppelplatten angeordnet und sind in radialer Richtung gleichmäßig beabstandet, insbesondere in gleicher Winkelteilung, zur Gelenkeinrichtung angeordnet. Mit Hilfe von drei Linearstellmitteln kann eine Verkippung der beiden Koppelplatten um beide Schwenkachsen ohne die Notwendigkeit von zusätzlichen Rückstelleinrichtungen, insbesondere Rückstellfedern, erreicht werden. Besonders bevorzugt ist die Gelenkeinrichtung zentral zwischen den drei Linearstellmitteln angeordnet, so dass die Abstände zwischen einer Mittelachse, die senkrecht zu den beiden Schwenkachsen angeordnet ist, und den jeweiligen Linearstellmitteln zumindest im Wesentlichen gleich sind. Hierdurch ist eine einfache Ansteuerung der Linearstellmittel gewährleistet, da sich aus der gleichverteilten Anordnung der Linearstellmittel ein gut vorhersagbares Bewegungsverhalten der beiden Koppelplatten zueinander ergibt.

Bevorzugt weisen die Linearstellmittel faltenbalgartig ausgebildete, elastisch deformierbare Wandbereiche auf. Dies ermöglicht bei kompakter Gestaltung der Linearstellmittel einen bezogen auf die Baulänge des Linearstellmittels günstiges Verhältnis zwischen einer geringsten Längenausdehnung in einer Neutralstellung des Linearstellmittels und einer größten Längenausdehnung in einer Maximalstellung des Linearstellmittels. Vorzugsweise sind die elastisch deformierbaren Wandbereiche rotationssymmetrisch zu einer Längsachse des jeweiligen Linearstellmittels ausgerichtet. Besonders bevorzugt weisen die Wandbereiche in einer die Längsachse umfassenden Querschnittsebene einen wiederkehrenden S-förmigen, insbesondere Doppel-S-förmigen, Querschnitt auf.

Eine vorteilhafte Ausführungsform der Ausgleichseinheit ist in der Zeichnung dargestellt. Dabei zeigt:
- Figur 1: eine perspektivische Darstellung einer Ausgleichseinheit in einer Neutralstallung,
- Figur 2: eine Seitenansicht der Ausgleichseinheit gemäß Figur 1,
- Figur 3: eine seitliche Schnittdarstellung der Ausgleichseinheit längs einer ersten Schnittebene und
- Figur 4: eine seitliche Schnittdarstellung der Ausgleichseinheit längs einer senkrecht zur ersten Schnittebene ausgerichteten zweiten Schnittebene.

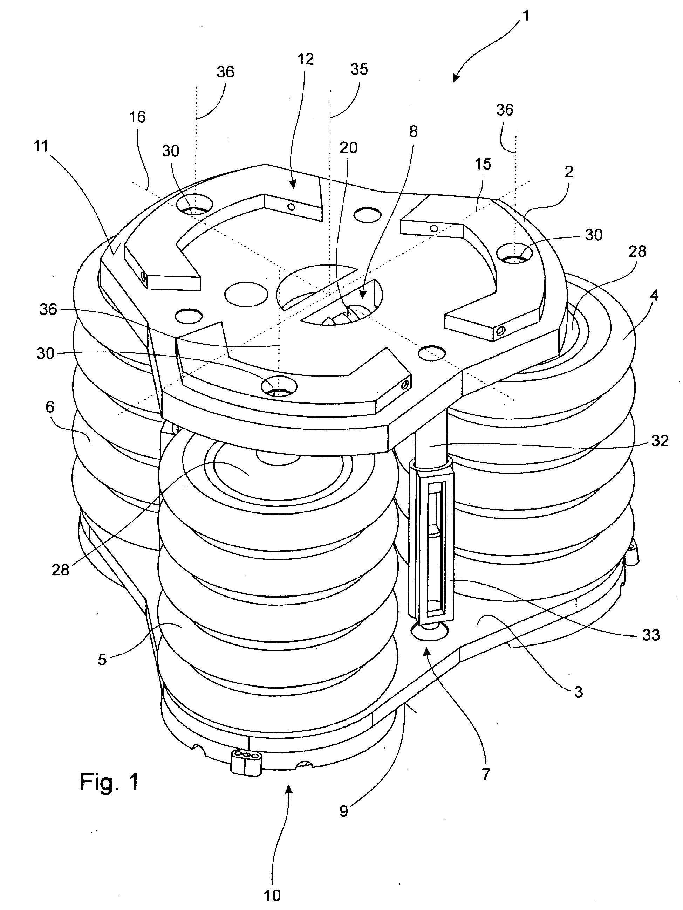

Eine in den Figuren 1 bis 4 in verschiedenen Ansichten dargestellte Ausführungsform einer Ausgleichseinrichtung 1 ist zur Ankopplung an ein distales Ende eines nicht dargestellten Manipulatorarms vorgesehen und ermöglicht die räumliche Ausrichtung eines ebenfalls nicht dargestellten Werkstücks oder Werkzeugs, das von dem Manipulatorarm beispielsweise in eine Bearbeitungszone einer nicht dargestellten Bearbeitungsmaschine gebracht werden soll.

Die Ausgleichseinrichtung 1 umfasst zwei Koppelplatten 2, 3, deren auch als Haupterstreckungsebenen bezeichnete größte Oberflächen in der dargestellten Neutralstellung der Ausgleichseinrichtung 1 parallel zueinander ausgerichtet sind. Ferner sind exemplarisch drei Linearstellmittel 4, 5 und 6 zwischen den beiden Koppelplatten 2, 3 angeordnet. Die Linearstellmittel 4, 5 und 6 sind durch Beaufschlagung mit einem Fluid, insbesondere Druckluft, ausgehend von der dargestellten Neutralstellung senkrecht zu den Haupterstreckungsebenen der Koppelplatten 2, 3 verlängerbar und bewirken dabei eine Verkippung der beiden Koppelplatten 2, 3 zueinander.

Für die Ermittlung der relativen Lage der beiden Koppelplatten 2 und 3, die mit Hilfe der Linearstellmittel 4, 5 und 6 und einer nachstehend näher beschriebenen Gelenkeinrichtung 8 in nicht dargestellter Weise zueinander verschwenkt werden können, sind vorliegend jeweils zwischen benachbarten Linearstellmitteln 4 und 5 bzw. 5 und 6 bzw. 4 und 6 jeweils Aufnahmeeinrichtungen 7 angeordnet, die jeweils für die Aufnahme einer nicht näher dargestellten Wegmesseinrichtung ausgebildet sind.

Die Ausgleichseinheit 1 weist an einer in Figur 1 nach unten gewandten Unterseite 9, die zumindest im Wesentlichen einer Haupterstreckungsebene entspricht, ein erstes Kupplungsteil 10 und an einer in Figur 1 nach oben gewandten Oberseite 11, die einer Haupterstreckungsebene entspricht, ein zweites Kupplungsteil 12 auf. Das erste Kupplungsteil 10 ist beispielsweise zur Anbringung der Ausgleichseinheit 1 an einem nicht dargestellten distalen Endbereich eines Manipulatorarms vorgesehen. Das zweite Kupplungsteil 12 ist vorzugsweise zur Aufnahme eines nicht dargestellten Werkstückträgers oder Werkzeughalters ausgebildet.

Die Gelenkeinrichtung 8 ist vorzugsweise an zentraler Stelle zwischen den beiden Koppelplatten 2 und 3 angeordnet und ist kinematisch als Kreuzgelenk anzusehen. Die Gelenkeinrichtung 8 ermöglicht eine relative Verkippung der beiden Koppelplatten 2 und 3 um zwei senkrecht zueinander ausgerichtete Schwenkachsen 15, 16. Die beiden Schwenkachsen 15, 16 schneiden sich vorzugsweise im Zentrum eines exemplarisch kugelförmig ausgebildeten Kopplungselements 17. In der Figur 1 sind die beiden Schwenkachsen 15, 16 zur besseren Sichtbarkeit oberhalb der Oberfläche der ersten Koppelplatte 2 dargestellt.

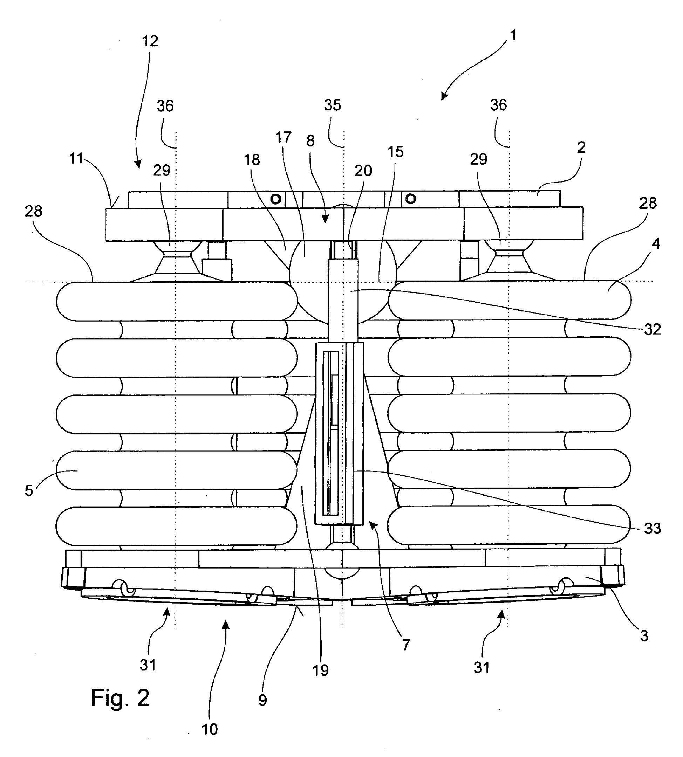

Das Kopplungselement 17 weist zwei jeweils ringförmig umlaufende und um 90 Grad zueinander versetzte Führungsnuten auf. Eine der beiden Führungsnuten ist mit dem Bezugszeichen 20 versehen und ist in den Figuren 1 und 2 erkennbar. In diese Führungsnut 20 greift ein an der unteren Koppelplatte 2 angebrachtes Gelenkteil 18 ein, das das Kopplungselement 17 formschlüssig aufnimmt, insbesondere vollständig umschließt.

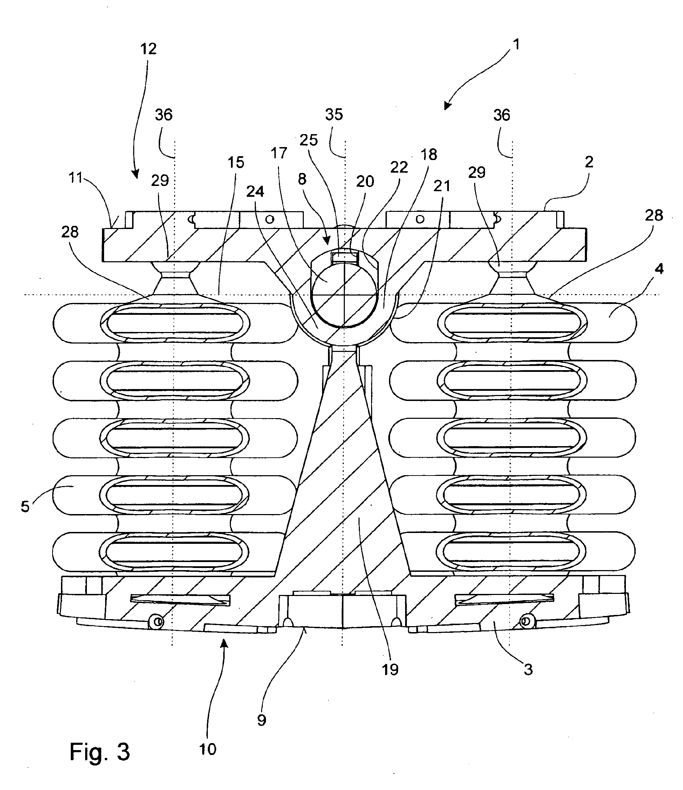

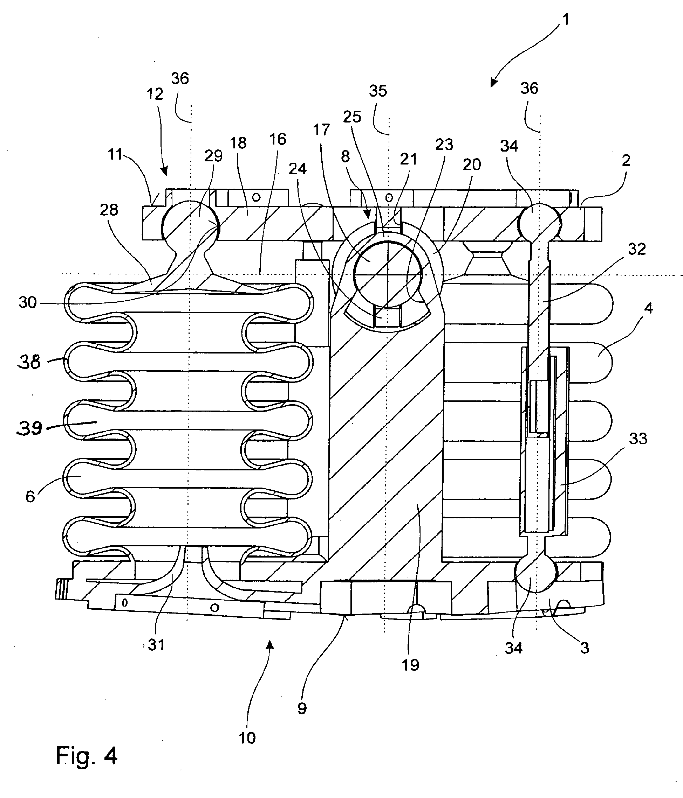

Die zweite Führungsnut am Kopplungselement 17 ist mit dem Bezugszeichen 21 versehen und ist in der Figur 3 sowie in der Figur 4 erkennbar. In diese zweite Führungsnut 21 greift ein zweites, an der oberen Koppelplatte 3 angebrachtes Gelenkteil 19 ein, das das Kopplungselement 17 formschlüssig aufnimmt, insbesondere vollständig umschließt. Die beiden Gelenkteile 18, 19 weisen jeweils eine Ausnehmung 22, 23 auf, in die jeweils das Kopplungselement 17 aufgenommen ist und die einen Bereich für die Hindurchführung eines ringförmig ausgebildeten Abschnitts 24, 25 des jeweils anderen Gelenkteils 18, 19 beinhaltet. Die Gelenkteile 18, 19 können somit problemlos das Kopplungselement 17 umfassen und die Relativbeweglichkeit des jeweils anderen Gelenkteils 18, 19 zumindest innerhalb eines vorgebbaren Schwenkwinkelbereichs gewährleisten.

Die Linearstellmittel 4, 5 und 6 sind beispielsweise jeweils abschnittsweise als Faltenbalge ausgeführt. Ein jeweils der unteren Koppelplatte 2 zugewandter Endbereich der Linearstellmittel 4, 5 und 6 ist jeweils einstückig an die Koppelplatte 2 angeformt und abdichtend mit dieser verbunden.

Die gemäß der Darstellung in der Figur 4 mit einem wiederkehrenden Doppel-S-Querschnitt rotationssymmetrisch zur jeweiligen Symmetrieachse ausgeführten Wandbereiche 38 begrenzen jeweils eine druckbeaufschlagbare Fluidkammer 39. Die Wandbereiche 38 sind in Abhängigkeit von der getroffenen Materialauswahl bezüglich ihrer Wandstärke so dimensioniert, dass sie ein einem weiten Bereich elastisch deformiert werden können, ohne dass es bei einer Druckbeaufschlagung der Fluidkammer 39 zu einer nennenswerten radialen Ausdehnung des jeweiligen Wandbereichs 38 kommt. Vielmehr soll eine zumindest nahezu ausschließlich lineare Ausdehnungsbewegung der Linearstellmittel 4, 5 und 6 längs der Symmetrieachse 36 bei Beaufschlagung mit einem Druckfluid stattfinden.

Die der oberen Koppelplatte 3 zugewandten Endbereiche der Linearstellmittel 4, 5 und 6 sind jeweils als abdichtende Abschlussplatten 28 einstückig an den elastischen Wandbereich des jeweiligen Linearstellmittels 4, 5 oder 6 angeformt. Vorzugsweise sind die Abschlussplatten 28 jeweils mit einem einstückig angeformten Kugelkopf 29 versehen, der zum formschlüssigen Eingriff in eine kugelabschnittsförmige Ausnehmung 30 in der zweiten Koppelplatte 3 ausgebildet ist und mit dieser ein Kugelgelenk bildet. In der ersten Koppelplatte 2 sind jeweils den Linearstellmitteln 4, 5 und 6 zugeordnete Anschlussstutzen 31 vorgesehen, die jeweils zur Aufnahme eines nicht dargestellten Fluidversorgungsschlauchs, insbesondere Druckluftschlauchs, ausgebildet sind.

Die zwischen den beiden Koppelplatten 2 und 3 angeordnete Aufnahmeeinrichtung 7 umfasst ein mit der ersten Koppelplatte 2 gekoppeltes erstes Teleskopglied 32 und ein mit der zweiten Koppelplatte 3 gekoppeltes zweites Teleskopglied 33. Die beiden Teleskopglieder 32, 33 weisen an einander entgegengesetzten Endbereichen jeweils einen Kugelkopf 34 auf, der jeweils in einer kugelabschnittsförmigen Bohrung 37 in der entsprechenden Koppelplatte 2, 3 aufgenommen ist. Das Teleskopglied 32 ist teleskopierbar im Teleskopglied 33 aufgenommen. Die Teleskopglieder 32, 33 führen aufgrund der jeweils endseitig vorgesehenen Kugelköpfe 34 bei einer Verschwenkung der beiden Koppelplatten 2, 3 um die Gelenkeinrichtung 8 eine lineare Relativbewegung zueinander aus. Diese lineare Relativbewegung der Teleskopglieder 32, 33 kann von einer nicht dargestellten Sensoreinrichtung detektiert werden, um die räumliche Lage der beiden Koppelplatten 2, 3 zueinander zu ermitteln.

Bei der dargestellten Ausführungsform der Ausgleichseinheit 1 sind exemplarisch drei Linearstellmittel 4, 5 und 6 vorgesehen, die in gleicher Winkelteilung um eine durch den Schnittpunkt der beiden Schwenkachsen verlaufende Mittelachse 35 angeordnet sind. Die Symmetrieachsen 36 der beispielhaft rotationssymmetrisch ausgebildeten Linearstellmittel 4, 5 und 6 sind jeweils in gleichem radialen Abstand zur Mittelachse 35 angeordnet. Die bei der dargestellten Ausführungsform vorgesehenen Aufnahmeeinrichtungen 7 sind jeweils um die halbe Winkelteilung der Linearstellmittel 4, 5 und 6 gegenüber diesen versetzt und ebenfalls mit gleichem radialen Abstand gegenüber der Mittelachse 35 angeordnet.

## Patentansprüche

1. Fluidisch betreibbare Ausgleichseinheit mit zwei zueinander beabstandet angeordneten Koppelplatten (2, 3), zwischen denen wenigstens zwei fluidisch betreibbare Linearstellmittel (4, 5, 6) zur variablen Einstellung einer Verkippung zwischen der ersten und der zweiten Koppelplatte (2, 3) angeordnet sind, wobei die Linearstellmittel (4, 5, 6) jeweils wenigstens eine Fluidkammer (39) mit jeweils wenigstens einem elastisch deformierbaren Wandbereich (38) umfassen, der für eine Längenänderung des jeweiligen Linearstellmittels (4, 5, 6) bei einer Druckbeaufschlagung der Fluidkammer (39) ausgebildet ist, und mit einer zwischen den beiden Koppelplatten (2, 3) angeordneten Gelenkeinrichtung (8), die für eine Relativbeweglichkeit der beiden Koppelplatten (2, 3) um zwei senkrecht zueinander ausgerichtete Schwenkachsen (15, 16) ausgebildet ist, **dadurch gekennzeichnet, dass** die Gelenkeinrichtung (8) als Kreuzgelenk ausgebildet ist, das wenigstens zwei Gelenkteile (18, 19) und wenigstens ein Kopplungselement (17) umfasst, wobei an jeder Koppelplatte (2, 3) wenigstens eines der Gelenkteile (18, 19) angebracht ist und die Gelenkteile (18, 19) formschlüssig in Führungsnuten (20, 21) des Kopplungselements (17) eingreifen.

2. Ausgleichseinheit nach Anspruch 1, **dadurch gekennzeichnet, dass** wenigstens ein Linearstellmittel (4, 5, 6) zumindest mit einem ersten Endbereich an wenigstens einer der Koppelplatten (2, 3) einstückig, vorzugsweise abdichtend, angeformt ist.

3. Ausgleichseinheit nach Anspruch 2, **dadurch gekennzeichnet, dass** wenigstens ein Linearstellmittel (2, 3) an einem zweiten Endbereich als Schwenkgelenkelement (29), vorzugsweise als Kugelgelenkelement, insbesondere als Gelenkkugel, ausgebildet ist.

4. Ausgleichseinheit nach einem der vorhergehenden Ansprüche, **dadurch gekennzeichnet, dass** die, insbesondere einstückig mit den zugeordneten Koppelplatten (2, 3) ausgebildeten, Gelenkteile (18, 19) der Gelenkeinrichtung (8) für eine Begrenzung der Relativbeweglichkeit der beiden Koppelplatten (2, 3) auf zwei rotatorische Freiheitsgrade der Bewegung ausgebildet sind.

5. Ausgleichseinheit nach einem der vorhergehenden Ansprüche, **dadurch gekennzeichnet, dass** die Koppelplatten (2, 3) und die Linearstellmittel (4, 5, 6) mittels eines generativen Herstellungsverfahrens, insbesondere selektivem Lasersintern, zumindest im Wesentlichen einstückig hergestellt sind.

6. Ausgleichseinheit nach einem der vorhergehenden Ansprüche, **dadurch gekennzeichnet, dass** zwischen den Koppelplatten (2, 3) wenigstens eine, vorzugsweise generativ hergestellte, abschnittsweise teleskopierbar ausgeführte Aufnahmeeinrichtung (7) für eine Wegmesseinrichtung angeordnet ist, die zwei jeweils endseitig an den gegenüberliegenden Koppelplatten (2, 3) schwenkbeweglich gelagerte, zueinander linearbewegliche Teleskopglieder (32, 33) umfasst.

7. Ausgleichseinheit nach Anspruch 6, **dadurch gekennzeichnet, dass** die Teleskopglieder (32, 33) an einander entgegengesetzten Endbereichen, insbesondere mittels Kugelgelenkelementen (34), relativbeweglich an der Koppelplatte (2, 3) angebracht sind und einander zugewandte Endbereiche teleskopartig schiebebeweglich ineinander aufgenommen sind.

8. Ausgleichseinheit nach einem der vorhergenenden Ansprüche, **dadurch gekennzeichnet, dass** genau drei Linearstellmittel (4, 5, 6) zwischen den Koppelplatten (2, 3) angeordnet sind, die in radialer Richtung gleichmäßig beabstandet, insbesondere in gleicher Winkelteilung, zur Gelenkeinrichtung (8) angeordnet sind.

9. Ausgleichseinheit nach einem der vorhergenenden Ansprüche, **dadurch gekennzeichnet, dass** die Linearstellmittel (4, 5, 6) faltenbalgartig ausgebildete, elastisch deformierbare Wandbereiche (38) aufweisen.

## Claims

1. Fluid-operated compensating unit, comprising two coupling plates (2, 3) arranged at a distance from one another, between which at least two fluid-operated linear adjusting means (4, 5, 6) for the variable adjustment of a tilt between the first and the second coupling plate (2, 3) are arranged, wherein each of the linear adjusting means (4, 5, 6) comprises at least one fluid chamber (39), each having at least one elastically deformable wall region (36) designed for altering the length of the respective linear adjusting means (4, 5, 6) if pressure is applied to the fluid chamber (39), and further comprising a joint device (8) designed for a relative mobility of the two coupling plates (2, 3) about two pivot axes (15, 16) oriented perpendicular to one another, **characterised in that** the joint device (8) is designed as a universal joint comprising at least two joint parts (18, 19) and at least one coupling element (17), wherein at least one of the joint parts (18, 19) is mounted on each coupling plate (2, 3) and the joint parts (18, 19) are in positive engagement with guide grooves (20, 21) of the coupling element (17).

2. Compensating unit according to claim 1, **characterised in that** at least one linear adjusting means (4, 5, 6) is integrally formed with at least one end region on at least one of the coupling plates (2, 3), preferably while forming a seal.

3. Compensating unit according to claim 2, **characterised in that** at least one linear adjusting means (4, 5, 6) is configured at a second end region as a swivel joint element (29), preferably as a ball joint element and in particular as a joint ball.

4. Compensating unit according to any of the preceding claims, **characterised in that** the joint parts (18, 19) of the joint device (8), which are in particular integrated with the respective coupling plates (2, 3), are designed for limiting the relative mobility of the two coupling plates (2, 3) to two rotational degrees of freedom of movement.

5. Compensating unit according to any of the preceding claims, **characterised in that** the coupling plates (2, 3) and the linear adjusting means (4, 5, 6) are produced at least substantially in one piece using a generative production method, in particular selective laser sintering.

6. Compensating unit according to any of the preceding claims, **characterised in that** between the coupling plates (2, 3) there is provided at least one, preferably produced generatively, reception device (7) for a position sensing device, which reception device (7) is telescopic in sections and comprises two telescopic members (32, 33) pivotably mounted at their ends on the opposite coupling plates (2, 3) and capable of linear movement relative to one another.

7. Compensating unit according to claim 6, **characterised in that** the telescopic members (32, 33) are mounted capable of relative movement on the coupling plate (2, 3) at opposite end regions, in particular by means of ball joint elements (34), and **in that** facing end regions are slidably located in one another in the manner of a telescopic arrangement.

8. Compensating unit according to any of the preceding claims, **characterised in that** precisely three linear adjusting means (4, 5, 6) are arranged between the coupling plates (2, 3), being arranged at identical distances from the joint device (8), in particular with identical angular division, in the radial direction.

9. Compensating unit according to any of the preceding claims, **characterised in that** the linear adjusting means (4, 5, 6) have wall regions (38) of a bellows design, which are elastically deformable.

## Revendications

1. Unité d'équilibrage à fonctionnement fluidique comprenant deux plaques de couplage (2, 3) disposées de manière espacée l'une de l'autre, entre lesquelles sont disposés au moins deux moyens d'ajustement linéaire (4, 5, 6) à fonctionnement fluidique servant à ajuster de manière variable un basculement entre la première et la deuxième plaque de couplage (2, 3), sachant que les moyens d'ajustement linéaire (4, 5, 6) comprennent respectivement au moins une chambre à fluide (39) dotée respectivement au moins d'une zone de paroi (38) élastiquement déformable, qui est réalisée pour une modification de la longueur du moyen d'ajustement linéaire (4, 5, 6) respectif en cas d'application d'une pression exercée par la chambre à fluide (39), et comprenant un dispositif d'articulation (8) disposé entre les deux plaques de couplage (2, 3), lequel est réalisé pour une mobilité relative des deux plaques de couplage (2, 3) autour de deux axes de pivotement (15, 16) orientés de manière perpendiculaire l'un par rapport à l'autre, **caractérisée en ce que** le dispositif d'articulation (8) est réalisé sous la forme d'un joint de cardan, qui comprend au moins deux parties d'articulation (18, 19) et au moins un élément d'accouplement (17), sachant qu'au moins une des parties d'articulation (18, 19) est mise en place au niveau de chaque plaque de couplage (2, 3) et que les parties d'articulation (18, 19) viennent en prise par complémentarité de forme dans des rainures de guidage (20, 21) de l'élément d'accouplement (17).

2. Unité d'équilibrage selon la revendication 1, **caractérisée en ce qu'**au moins un moyen d'ajustement linéaire (4, 5, 6) est formé au moins par une première zone d'extrémité, au niveau d'au moins une des plaques de couplage (2, 3), d'un seul tenant, de préférence de manière à assurer l'étanchéité.

3. Unité d'équilibrage selon la revendication 2, **caractérisée en ce qu'**au moins un moyen d'ajustement linéaire (2, 3) est réalisé au niveau d'une deuxième zone d'extrémité sous la forme d'un élément d'articulation par pivotement (29), de préférence sous la forme d'un élément formant un joint sphérique, en particulier sous la forme d'une rotule d'articulation.

4. Unité d'équilibrage selon l'une quelconque des revendications précédentes, **caractérisée en ce que** les parties d'articulation (18, 19) du dispositif d'articulation (8), réalisées en particulier d'un seul tenant avec les plaques de couplage (2, 3) associées, sont réalisées pour limiter la mobilité relative des deux plaques de couplage (2, 3) à deux degrés de liberté en rotation du mouvement.

5. Unité d'équilibrage selon l'une quelconque des revendications précédentes, **caractérisée en ce que** les plaques de couplage (2, 3) et les moyens d'ajustement linéaire (4, 5, 6) sont fabriqués au moins essentiellement d'un seul tenant au moyen d'un procédé de fabrication génératif, en particulier au moyen d'un frittage sélectif par laser.

6. Unité d'équilibrage selon l'une quelconque des revendications précédentes, **caractérisée en ce qu'**au moins un dispositif de logement (7) fabriqué de préférence de manière générative, réalisé par endroits de manière télescopique, destiné à un dispositif de mesure de trajet, est disposé entre les plaques de couplage (2, 3), ledit dispositif de logement comprenant deux membres télescopiques (32, 33) mobiles l'un par rapport à l'autre de manière linéaire, logés respectivement côté extrémité de manière mobile par pivotement au niveau des plaques de couplage (2, 3) se faisant face.

7. Unité d'équilibrage selon la revendication 6, **caractérisée en ce que** les membres télescopiques (32, 33) sont mis en place au niveau de zones d'extrémité opposées les unes aux autres, en particulier au moyen d'éléments formant des joints sphériques (34), de manière relativement mobile au niveau de la plaque de couplage (2, 3), et **en ce que** des zones d'extrémité tournées les unes vers les autres sont logées les unes dans les autres de manière mobile par coulissement, de manière télescopique.

8. Unité d'équilibrage selon l'une quelconque des revendications précédentes, **caractérisée en ce que** précisément trois moyens d'ajustement linéaires (4, 5, 6) sont disposés entre les plaques de couplage (2, 3), lesquels sont disposés dans la direction radiale avec un espacement constant, en particulier selon la même répartition angulaire, par rapport au dispositif d'articulation (8).

9. Unité d'équilibrage selon l'une quelconque des revendications précédentes, **caractérisée en ce que** les moyens d'ajustement linéaire (4, 5, 6) présentent des zones de paroi (38) élastiquement déformables, réalisées à la manière de soufflets à plis.
